Europäisches Patentamt

European Patent Office

Office européen des brevets

(11) Veröffentlichungsnummer: **0 208 674**
**A2**

(12) ## EUROPÄISCHE PATENTANMELDUNG

(21) Anmeldenummer: 86890166.1

(51) Int. Cl.⁴: **G05B 19/04**

(22) Anmeldetag: 05.06.86

(30) Priorität: 11.07.85 AT 2057/85

(43) Veröffentlichungstag der Anmeldung:
14.01.87 Patentblatt 87/03

(84) Benannte Vertragsstaaten:
CH DE FR LI NL

(71) Anmelder: **Wein, Gedeon, Ing.**
**Schlossstrasse 3**
**A-2320 Schwechat(AT)**

(72) Erfinder: **Wein, Gedeon, Ing.**
**Schlossstrasse 3**
**A-2320 Schwechat(AT)**

(74) Vertreter: **Köhler-Pavlik, Johann, Dipl.-Ing.**
**Margaretenplatz 5**
**A-1050 Wien(AT)**

(54) **Programmsteuergerät zur Steuerung von Anlagen, insbesondere Kühlanlagen.**

(57) Bei einem Programmsteuergerät zur Steuerung von Anlagen, insbesondere Kühlanlagen, mit einem Programmgeber zum zeitlichen Ein-und Ausschalten von Einrichtungen, insbesondere elektrische Einrichtungen, als zumindest eine, durch einen Motor in Umdrehung versetzte Scheibe gebildet ist, welche eine Mehrzahl von Steuerspuren in Form von konzentrisch angeordneten Hell-Dunkelsegmenten aufweist und jeder Steuerspur eine fotoelektrische Abtasteinrichtung zugeordnet ist, an deren Ausgang jeweils eine Schalteinrichtung angeschlossen ist, besteht die Scheibe (3) aus transparentem Material, wobei die Dunkelsegmente der Steuerspuren ($s_1$ bis $s_4$) lösbar auf der Scheibe (3) angebracht sind. Vorzugsweise bestehen die Dunkelsegmente aus Kunststoffmaterial und sind auf der Scheibe (3) durch Klebung angebracht.

Fig.2

EP 0 208 674 A2

## Programmsteuergerät zur Steuerung von Anlagen, insbesondere Kühlanlagen

Die Erfindung betrifft ein Programmsteuergerät zur Steuerung von Anlagen, insbesondere Kühlanlagen, mit einem Programmgeber zum zeitlichen Ein-und Ausschalten von Einrichtungen, insbesondere elektrische Einrichtungen, der als zumindest eine, durch einen Motor in Umdrehung versetzte transparente Scheibe gebildet ist, welche eine Mehrzahl von Steuerspuren in Form von konzentrisch angeordneten Hell-Dunkelsegmenten aufweist und jeder Steuerspur eine fotoelektrische Abtasteinrichtung zugeordnet ist, an deren Ausgang jeweils eine Schalteinrichtung angeschlossen ist.

Durch die DE-PS 26 22 624 ist eine Einrichtung zum Erzeugen von zeitabhängigen Steuersignalen bekannt, bei welcher in einer lichtundurchlässigen Scheibe Bohrungen vorgesehen sind, die als Hellsegmente dienen. Durch die Anzahl und Lage der Bohrungen ist das Programm festgelegt. Ist eine Abänderung des Programms erforderlich, so muß die Scheibe mit zusätzlichen Bohrungen versehen werden, bzw. es müssen bereits vorhandene Bohrungen verschlossen werden. Wird das Programm vollständig geändert, so muß eine neue Scheibe hergestellt werden.

Aufgabe der Erfindung ist die Schaffung einer neuen Maßnahme für obigen Einsatzzweck, bei welcher Programmänderungen und die Erstellung von neuen Programmen rasch und auf einfache Weise durchgeführt werden können. Dies wird bei einem Programmsteuergerät der eingangs genannten Art erfindungsgemäß dadurch erreicht, daß die Dunkelsegmente der Steuerspuren lösbar auf der Scheibe angebracht sind.

In vorteilhafter Weise bestehen die Dunkelsegmente aus Kunststoff und sind auf der Scheibe durch eine lösbare Klebung angebracht. Vorzugsweise sind die Dunkelsegmente aus einer selbstklebenden Kunststoffolie hergestellt.

Weitere Einzelheiten der Erfindung werden nachfolgend anhand eines Ausführungsbeispiels mit Hilfe der Figuren beschrieben. Es zeigen

Fig. 1 ein Blockschaltbild eines Programmsteuergeräts und

Fig. 2 eine im Programmsteuergerät nach Fig. 1 verwendete erfindungsgemäße Scheibe, welche fotoelektrisch abgetastet wird.

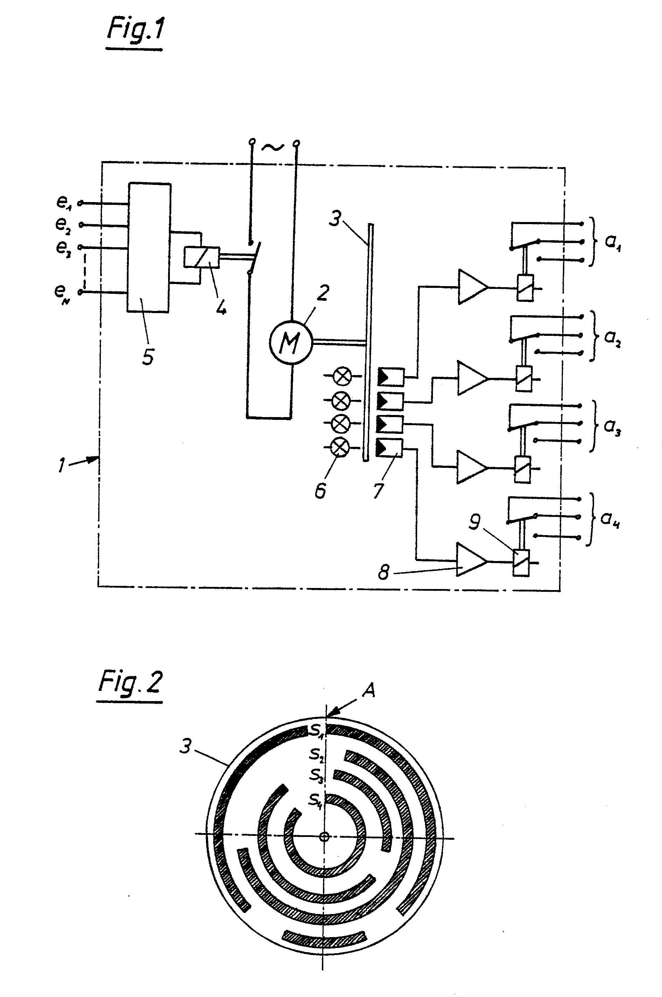

In Fig. 1 bezeichnet 1 allgemein das Programmsteuergerät. Ein Motor 2, z.B. ein Synchronmotor mit Untersetzungsgetriebe (nicht dargestellt), treibt eine Scheibe 3 an. Als Motor 2 kann auch ein Schrittschalt motor eingesetzt werden, der von einer entsprechenden Stromquelle versorgt wird. Eine Schalteinrichtung, beispielsweise in Form eines Relais 4 schaltet den Motor 2 ein und aus. Die Schalteinrichtung bzw. das Relais 4 ist an den Ausgang einer logischen Verknüpfungsschaltung 5 angeschlossen, deren Eingänge zum Anschluß von Signalgebern dienen und mit $e_1, e_2, e_3, \ldots \ldots e_n$ bezeichnet sind. An den Eingang $e_1$ kann als Signalgeber beispielsweise eine Zeitschaltuhr angeschlossen sein, an den Eingang $e_2$ ein Temperaturschalter, an den Eingang $e_3$ ein Druckschalter usw. In der logischen Verknüpfungsschaltung 5 können die Signale der Signalgeber an den Eingängen $e_1, e_2, e_3, \ldots \ldots e_n$ in gewünschter Weise durch UND-, ODER-, EXKLUSIV-ODER-Glieder usw., kombiniert werden, sodaß der Motor 2 in Abhängigkeit von den Eingangsgrößen über das Relais 4 ein-bzw. ausgeschaltet wird.

Die Scheibe 3 besteht in diesem Fall aus einem transparenten Material, z.B. Acrylglas oder Plexiglas. Wie aus Fig. 2 ersichtlich ist, sind auf der Scheibe 3 beispielsweise vier Steuerspuren $s_1$ bis $s_4$ angebracht, wobei die Dunkelsegmente aus konzentrischen Kreisringsegmenten gebildet sind.

Die Dunkelsegmente bestehen aus lichtundurchlässigem Kunststoffmaterial, z.B. Kunststoffolie. Sie werden durch Schneiden oder Stanzen in die gewünschte Form gebracht und sodann auf die Scheibe 3 aufgeklebt. Zweckmäßig wird hiebei ein Kleber verwendet, der eine leichte Ablösung der Dunkelsegmente von der Scheibe 3 erlaubt, sodaß jederzeit eine rasche Abänderung des Programms ermöglicht wird. In vorteilhafter Weise wird für die Herstellung der Dunkelsegmente eine selbstklebende Kunststoffolie verwendet, die ebenfalls eine leichte Ablösung der Dunkelsegmente von der Scheibe 3 ermöglicht.

Jeder der vier Steuerspuren $s_1$ bis $s_4$ ist eine fotoelektrische Abtasteinrichtung zugeordnet, bestehend aus vier vor der Scheibe 3 angeordneten Lampen 6 und vier hinter der Scheibe 3 angeordneten Fotodetektoren 7. Der Ausgang jedes der Fotodetektoren 7 ist, gegebenenfalls über einen Verstärker 8 mit einem Relais 9 verbunden. Die Schaltkontakte der Relais 9 sind mit $a_1$ bis $a_4$ bezeichnet und dienen zum Ein-und Ausschalten von Einrichtungen, insbesondere von elektrischen Einrichtungen wie Motore, Heizkörper, Magnetventile etc., die in der zu steuernden Anlage vorgesehen sind.

Anschließend wird die Funktionsweise des gesamten Programmsteuergeräts beschrieben. In der Ausgangsstellung der Scheibe 3 befinden sich die Lampen 7 bzw. die Fotodetektoren bei der mit A in Fig. 2 bezeichneten Stelle. Die Spuren $s_1$ und $s_4$ sind z.B. an der Stelle A lichtundurchlässig, während die Spuren $s_2$ und $s_3$ lichtdurchlässig sind, d.h. die den Spuren $s_1$ und $s_4$ zugeordneten Foto-

detektoren 7 werden beleuchtet während die den Spuren $s_2$ und $s_3$ zugeordneten Fotodetektoren 7 dunkel bleiben. Werden als Fotodetektoren 7 beispielsweise Fotodioden oder Fototransistoren verwendet, so liefern diese bei Beleuchtung Strom. Dieser Strom wird über den jeweiligen Verstärker 8 verstärkt und bewirkt ein Ansprechen bzw. Schalten des jeweiligen Relais 9. An der Stelle A sind demnach die Schaltkontakte $a_1$ und $a_4$ in Ruhestellung und die Schaltkontakte $a_2$ und $a_3$ in Arbeitsstellung. Durch eine, beispielsweise am Eingang $e_1$ der Verknüpfungsschaltung 5 angeschlossene Zeitschaltuhr wird der Motor 2 zu einem vorbestimmten Zeitpunkt eingeschaltet, d.h., das Programm läuft.

In der Folge werden die Schaltkontakte $a_1$ bis $a_4$ entsprechend den Hell-Dunkelspuren $s_1$ bis $s_4$ geschaltet, bis die Scheibe 3 wieder in die Ausgangsstellung A zurückkehrt. Um die Scheibe 3 bei der Stelle A wieder anzuhalten, kann z.B. eine eigene Steuerspur (nicht dargestellt) auf der Scheibe 3 angebracht sein, die über eine zugeordnete zusätzliche fotoelektrische Abtasteinrichtung an der Stelle A ein Signal abgibt, welches einem der Steuereingänge $e_2$ bis $e_n$ der Verknüpfungsschaltung 5 zugeführt wird, und eine Abschaltung des Motors 2 bewirkt. Anstelle der Steuerspur und der zugehörigen Abtasteinrichtung kann auch ein Mikroschalter vorgesehen sein, der durch eine an der Stelle A der Scheibe 3 angebrachte Nocke betätigt wird, und dessen Signal wieder einem der Steuereingänge $e_2$ bis $e_n$ zur Abschaltung des Motors 2 zugeführt wird.

An die Eingänge $e_2$ bis $e_n$ können Signalgeber wie Temperatur-,Druck-,Feuchtigkeitsschalter od.dgl. angeschlossen sein, die zur Programmunterbrechung oder Beendigung des Programms dienen. Diese Signalgeber können aber auch anstelle der Zeitschaltuhr den Beginn des Programms einleiten, u.zw. je nachdem die Verknüpfung der Signale der Signalgeber in der Verknüpfungsschaltung 5 erfolgt, wobei die Art der Verknüpfung dem jeweiligen Verwendungszweck bzw. Programm angepaßt wird. Die Verknüpfungsschaltung kann aus an sich bekannten Bauteilen, wie Halbleiterschaltelemente, Relais, od.dgl. aufgebaut sein.

Die fotoelektrische Abtasteinrichtung arbeitet beim dargestellten Ausführungsbeispiel im Durchlichtverfahren, d.h., das von der Lampe 6 abgestrahlte Licht tritt durch die transparente Scheibe 3 zum Fotodetektor 7. Es kann auch das Reflexionsverfahren verwendet werden, bei welchem die Steuerspuren der Scheibe 3 teilweise aus einem lichtreflektierenden Material besteht und das von der Lampe 6 abgestrahlte Licht von der Scheibe 3 zum Fotodetektor 7 reflektiert wird. Auch in diesem Fall können die lichtreflektierenden Teile der Steuerspuren aus einem geeigneten Kunststoffmaterial-bzw. -folie bestehen und durch Klebung an der Scheibe 3 angebracht werden.

## Ansprüche

1. Programmsteuergerät zur Steuerung von Anlagen, insbesondere Kühlanlagen, mit einem Programmgeber zum zeitlichen Ein-und Ausschalten von Einrichtungen, insbesondere elektrische Einrichtungen, der als zumindest eine, durch einen Motor in Umdrehung versetzte transparente Scheibe gebildet ist, welche eine Mehrzahl von Steuerspuren in Form von konzentrisch angeordneten Hell-Dunkelsegmenten aufweist und jeder Steuerspur eine fotoelektrische Abtasteinrichtung zugeordnet ist, an deren Ausgang jeweils eine Schalteinrichtung angeschlossen ist, dadurch gekennzeichnet, daß die Dunkelsegmente der Steuerspuren ($s_1$ bis $s_4$) lösbar auf der Scheibe (3) angebracht sind.

2. Programmsteuergerät nach Anspruch 1, dadurch gekennzeichnet, daß die Dunkelsegmente aus Kunststoffmaterial bestehen und auf der Scheibe (3) durch eine lösbare Klebung angebracht sind.

3. Programmsteuergerät nach Anspruch 2, dadurch gekennzeichnet, daß die Dunkelsegmente aus einer lösbaren selbstklebenden Kunststoffolie hergestellt sind.

## Fig.1

## Fig.2